# EUROPÄISCHE PATENTANMELDUNG

(11) **EP 1 136 942 A1**
(43) Veröffentlichungstag der Anmeldung: **26.09.2001**
(21) Anmeldenummer: 00106221.5
(22) Anmeldetag: 22.03.2000
(51) Int. Cl.: G06K 19/073, H01L 27/00, G07F 7/08, G06F 1/00

(54) **Schaltungsanordnung zum Schützen einer Schaltung gegen Analyse und Manipulation**

(71) Anmelder: Infineon Technologies AG, 81669 München (DE)
(72) Erfinder: Pockrandt, Wolfgang, 85293 Reichertshausen (DE)
(74) Vertreter: Fischer, Volker, Dipl.-Ing.

(57) **Zusammenfassung**

Zum Schutz einer integrierten Schaltung, in der sicherheitsrelevante Daten verarbeitet werden, wird eine erste integrierte Schaltung (2) mit einer zweiten integrierten Schaltung (3) abgedeckt. Erfindungsgemäß wird die erste integrierte Schaltung (2) beispielsweise in Siliziumtechnologie und die zweite integrierte Schaltung (3) in Polymertechnologie gebildet. Eine Manipulation der ersten integrierten Schaltung (2) kann durch die Anordnung der zweiten integrierten Schaltung (3) auf der ersten integrierten Schaltung (2) nicht ohne Manipulation der zweiten integrierten Schaltung (3) durchgeführt werden. Erfindungsgemäß wird sowohl in der ersten integrierten Schaltung (2) als auch in der zweiten integrierten Schaltung (3) eine Berechnung durchgeführt und die Ergebnisse der Berechnungen verglichen, so daß eine Manipulation der ersten integrierten Schaltung (2) und der zweiten integrierten Schaltung (3) detektiert werden kann.

## Beschreibung

Die vorliegende Erfindung betrifft eine Schaltungsanordnung zum Schützen einer Schaltung gegen Analyse und Manipulation, ein Verfahren zu ihrer Herstellung und ein Verfahren zu ihrem Betrieb.

Integrierte Schaltungen werden unter anderem zum Bearbeiten und Speichern von Daten verwendet. Handelt es sich bei den bearbeitenden Verfahren bzw. bei den Daten um sicherheitsrelevante Informationen wie z.B. Chipkarten, Geldkarten, Krankenkarten oder Tags mit Zugangsberechtigungen, geheimen Schlüsseln etc., so sind die Daten vor einer unerlaubten Analyse und Manipulation zu schützen.

Mögliche Angriffe auf Chipkarten, wie sogenannte Smart-Card-Prozessoren sind z.B. in "Design Principles for Tamper-Resistant Smartcard Processors", Oliver Kömmerling, USENIX Workshop on Smartcard Technology, Chicago, Illinois, USA, Mai 10 - 11, 1999 beschrieben.

Eine bisher verwendete Methode, um sicherheitsrelevante Informationen zu schützen besteht darin, die kritischen Informationen in möglichst tiefen Ebenen der integrierten Schaltung zu führen und mit Leitungen zu verdecken, die in höheren Ebenen liegen. Zum einen ist es jedoch problematisch, dies konsequent durchzuführen, da der Schaltungsentwurf mit erheblichem Mehraufwand verbunden ist. Darüber hinaus ist es möglich, Schaltungen mit modernen Analysemitteln wie einem REM (raster electron microscope), TEM (transmission electron microscope) oder einem FIB (focused ion beam) zu analysieren, die durch eine Verdeckung geschützten Leitungen freizulegen und neu zu verdrahten, so daß die Schaltung analysiert und die Daten manipuliert werden können.

Ebenso ist es möglich, z.B. mit einem IR-Laser zu arbeiten und Schaltungen und ihr Schaltverhalten über die Rückseite des Chips, auf dem der integrierte Schaltkreis angeordnet ist, durch das Substrat hindurch zu analysieren. Die integrierte Schaltung kann zwar dadurch geschützt werden, daß das Substrat relativ dick ausgeführt wird bzw. die Chiprückseite mit einem lichtundurchlässigen Material abgedeckt wird. Diese beiden Schutzmaßnahmen können jedoch durch Abschleifen der Chiprückseite unwirksam gemacht werden.

Es ist die Aufgabe der Erfindung, eine Schaltungsanordnung zum Schützen einer Schaltung gegen Analyse und Manipulation, ein Verfahren zu ihrer Herstellung und ein Verfahren zu ihrem Betrieb anzugeben.

Erfindungsgemäß wird die gestellte Aufgabe durch eine Schaltungsanordnung zum Schützen einer Schaltung gegen Analyse und Manipulation mit folgenden Merkmalen gelöst:
- eine Schaltung, die auf einem Substrat in einer ersten Technologie gebildet ist und
- eine zweite Schaltung, die auf dem Substrat in einer zweiten Technologie gebildet ist.

Bei der vorliegenden Erfindung wird eine erste Schaltung in einer ersten Technologie und eine zweite Schaltung in einer zweiten Technologie gefertigt. Dabei kann die zweite Schaltung in der zweiten Technologie zur Abschirmung der sicherheitsrelevanten Informationen in der ersten Schaltung verwendet werden. Aus dem Stand der Technik ist zwar bekannt, zur Abschirmung eine passive Ebene zu verwenden, erfindungsgemäß wird jedoch in dieser Ebene die zweite Schaltung realisiert.

Eine weitere Anordnung sieht vor, daß das Substrat eine Oberseite und eine ihr gegenüberliegende Unterseite aufweist und die erste Schaltung auf der Oberseite des Substrates angeordnet ist. Durch diese Schaltungsanordnung ist ermöglicht, daß als Substrat beispielsweise ein Siliziumsubstrat verwendet wird, in dem die erste Schaltung mit CMOS-kompatiblen (complementary metal oxide semiconductor) Schaltkreisen hergestellt wird.

Eine weitere Ausgestaltung der Erfindung sieht vor, daß die zweite Schaltung auf der ersten Schaltung angeordnet ist. Durch diese Anordnung ist es in vorteilhafter Weise möglich, die erste Schaltung mittels der zweiten Schaltung abzuschirmen. Durch diese Anordnung kann sichergestellt werden, daß eine Manipulation an der ersten Schaltung nur möglich ist, nachdem zumindest ein Teil der zweiten Schaltung entfernt wurde. Dadurch ist es z.B. möglich, die Manipulation an der zweiten Schaltung aufgrund ihrer geänderten Funktionsweise zu registrieren, und beispielsweise einen Alarm auszulösen.

Eine weitere Ausgestaltung der Erfindung sieht vor, daß die zweite Schaltung auf der Unterseite des Substrates angeordnet ist. Durch die Anordnung auf der Unterseite des Substrates wird in vorteilhafter Weise verhindert, daß beispielsweise eine Rückseitenanalyse mittels eines Infrarotlasers durchgeführt werden kann, ohne die zweite Schaltung zu entfernen und das Substrat zu dünnen. Auch hier kann die Manipulation der zweiten Schaltung überprüft werden und gegebenenfalls ein Alarm ausgelöst werden.

Weiterhin ist vorgesehen, daß die erste Schaltung in Siliziumtechnologie gebildet ist. Die Ausführung der ersten Schaltung in Siliziumtechnologie ermöglicht die Verwendung herkömmlicher Herstellungsverfahren der Halbleitertechnik. Dadurch können kompakte, preisgünstige, schnelle und zuverlässige Schaltungen in CMOS gefertigt werden.

In einer vorteilhaften Weiterbildung der erfindungsgemäßen Anordnung ist die zweite Schaltung in Polymertechnik gebildet. Schaltungen aus Polymertechnik werden z.B. in "Low-cost all-polymer integrated circuits, C.J. Drury et. al., Applied Physics Letters, Volume 73, 6. July 1998, p. 108 - 110" beschreiben. Dort wird ausgeführt, daß integrierte Schaltungen vollständig auf Polymerbasis gebildet werden können. Polymerbauelemente haben den Vorteil, daß sie mit herkömmlichen Analyseverfahren nicht zu entdecken sind und daher für einen potentiellen Angreifer ein kaum zu überwindendes Hindernis darstellen.

Eine weitere Ausgestaltung der Anordnung sieht vor, daß die zweite Schaltung die erste Schaltung abdeckt. Dadurch ist sichergestellt, daß die kritischen Informationen, die beispielsweise in der ersten Schaltung verarbeitet werden, von der zweiten Schaltung abgeschirmt und geschützt werden.

In einer vorteilhaften Ausgestaltung der erfindungsgemäßen Anordnung ist vorgesehen, daß die zweite Schaltung eine Abschirmung für die erste Schaltung ist.

Eine weitere vorteilhafte Ausgestaltung der Erfindung sieht vor, daß in der ersten Schaltung und/oder in der zweiten Schaltung ein rückgekoppeltes Schieberegister angeordnet ist. Ein rückgekoppeltes Schieberegister ist dazu geeignet, eine anfangs in ihm eingeschriebene Zufallszahl auf komplexe Art und Weise zu verarbeiten und ein Verarbeitungsergebnis bereitzustellen. Beispielsweise wird in der ersten Schaltung und in der zweiten Schaltung ein äquivalentes rückgekoppeltes Schieberegister gebildet, mit der gleichen Zufallszahl gestartet, und das Ergebnis beider Berechnungen verglichen. Dadurch kann eine Manipulation der ersten Schaltung bzw. der zweiten Schaltung erkannt werden und gegebenenfalls ein Alarm ausgelöst werden.

In Bezug auf ein Verfahren zum Betrieb einer Schaltungsanordnung zum Schützen einer Schaltung gegen Analyse und Manipulation wird die Aufgabe gelöst durch ein Verfahren zum Betrieb einer Schaltung gemäß der oben angegebenen gegenständlichen Merkmale mit den Schritten:
- Durchführen einer Berechnung in der ersten Schaltung;
- Durchführen einer Berechnung in der zweiten Schaltung, wobei ein Teilergebnis erzeugt wird;
- Übertragen des Teilergebnisses von der zweiten Schaltung an die erste Schaltung.

Das angegebene Verfahren führt einen Teil der Berechnung in der zweiten Schaltung aus und überträgt dieses Ergebnis an die erste Schaltung. In der ersten Schaltung kann dieses Ergebnis dazu verwendet werden, die ordnungsgemäße Funktion der zweiten Schaltung zu überprüfen. Da vorgesehen ist, die zweite Schaltung als Schutz bzw. Abschirmung für die erste Schaltung anzuordnen, kann somit eine Manipulation der zweiten Schaltung nachgewiesen werden und entsprechend die Manipulation der ersten Schaltung vermutet werden, so daß ein Alarm ausgelöst werden kann.

Ein weiterer Verfahrensschritt zum Betrieb einer Schaltungsanordnung sieht vor, daß ein Berechnungsergebnis der ersten Schaltung mit einem Berechnungsergebnis der zweiten Schaltung verglichen wird. Der Vergleich zweiter Berechnungsergebnisse kann dazu verwendet werden, die Manipulation der zweiten Schaltung bzw. der ersten Schaltung nachzuweisen.

Ein weiterer vorteilhafter Verfahrensschritt zum Betrieb einer Schaltung sieht vor, daß eine Manipulation der ersten Schaltung und/oder eine Manipulation der zweiten Schaltung durch den Vergleich eines ersten Berechnungsergebnisses der ersten Schaltung mit einem zweiten Berechnungsergebnis der zweiten Schaltung detektiert wird. Durch das Detektieren einer Manipulation ist es in vorteilhafter Weise möglich, mit einem Alarm auf die detektierte Manipulation zu reagieren.

Bezüglich des Verfahrens zur Herstellung einer Schaltungsanordnung zum Schützen einer Schaltung gegen Analyse und Manipulation wird die gestellte Aufgabe gelöst durch ein Verfahren zur Herstellung einer Schaltung mit den Schritten:
- Bereitstellen eines Substrats;
- Bilden einer ersten Schaltung in einer ersten Technologie auf dem Substrat;
- Bilden einer zweiten Schaltung in einer zweiten Technologie auf dem Substrat.

Das erfindungsgemäße Verfahren ermöglicht die Herstellung von Schaltungen, die in unterschiedlichen Technologien gefertigt sind. Bei der ersten Technologie kann es sich beispielsweise um eine Siliziumtechnologie mit CMOS-Bauelementen handeln. Die zweite Schaltung wird dabei in einer zweiten Technologie gebildet, wobei es sich beispielsweise ebenfalls um eine Siliziumtechnologie mit monokristallinem Silizium, um eine Siliziumtechnologie mit Polysilizium-Dünnfilmtransistoren, oder um eine Technologie mit Schaltkreisen, die auf Polymerbasis gebildet sind, handelt.

Eine Verfahrensvariante des Herstellungsverfahrens sieht vor, daß die erste Schaltung in einer Halbleitertechnologie und die zweite Schaltung in einer Polymertechnologie hergestellt wird.

Ausführungsbeispiele der Erfindung werden nachfolgend anhand von Figuren dargestellt und erläutert.

In den Figuren zeigen:
- Figur 1: ein Substrat mit einer ersten und einer zweiten Schaltung;
- Figur 2: schematischer Ablauf des Betriebs einer ersten Schaltung und einer zweiten Schaltung;

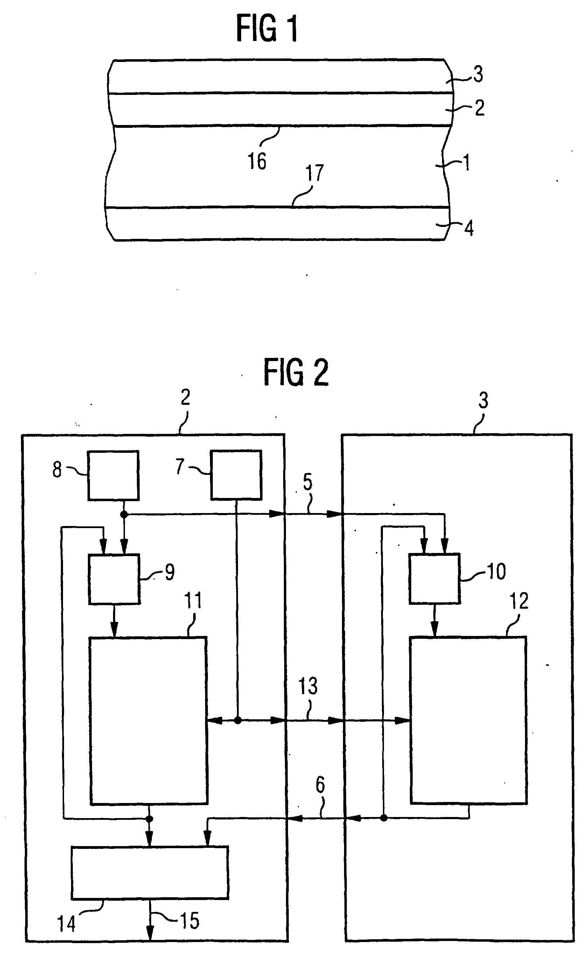

In Figur 1 ist ein Substrat 1 dargestellt, das eine Oberseite 16 und eine Unterseite 17 aufweist. Auf der Oberseite 16 des Substrates 1 ist eine erste Schaltung 2 angeordnet. Die erste Schaltung 2 ist dabei in einer ersten Technologie gebildet, wobei es sich zum Beispiel um eine Siliziumtechnologie mit CMOS-Bauelementen handelt. Weiterhin ist auf der ersten Schaltung 2 eine zweite Schaltung 3 angeordnet. Die zweite Schaltung 3 ist in einer zweiten Technologie gebildet, bei der es sich ebenfalls um eine Siliziumtechnologie mit monokristallinem Silizium, um eine Siliziumtechnologie auf Polysiliziumbasis mit TFT-Bauelementen (thin film transistor) oder um eine Technologie mit Polymerbauelementen handeln kann. Weiterhin ist auf der Unterseite 17 des Substrates 1 eine dritte Schaltung 4 angeordnet. Die dritte Schaltung 4 ist in der zweiten Technologie gebildet.

Zur Herstellung der in Figur 1 dargestellten Schaltungen kann ein Verfahren verwendet werden, das auf einem Siliziumsubstrat 1 eine erste Schaltung 2 in Siliziumtechnologie bildet. Auf der Unterseite 17 des Substrates 1 und auf der ersten Schaltung 2 werden anschließend Schaltungen auf Polymerbasis gebildet.

In Figur 2 ist ein Blockschaltbild mit einer ersten Schaltung 2 und einer zweiten Schaltung 3 dargestellt. Die erste Schaltung 2 ist beispielsweise in Siliziumtechnologie, die zweite Schaltung 3 in Polymertechnologie gebildet. In der ersten Schaltung 2 ist ein Zufallsgenerator 8 angeordnet, der mit einer ersten Verknüpfung 9 verbunden ist, die ihrerseits mit einem ersten rückgekoppelten Schieberegister 11 verbunden ist. Weiterhin ist eine Kontrolle 7 in der ersten Schaltung 2 angeordnet. Die Kontrolle 7 ist mit dem ersten rückgekoppelten Schieberegister 11 verbunden. Das erste rückgekoppelte Schieberegister 11 ist mit einem Vergleicher 14 verbunden, der an seinem Ausgang mit einem Alarm 15 verbunden ist.

In der zweiten Schaltung 3 ist eine zweite Verknüpfung 10 und ein zweites rückgekoppeltes Schieberegister 12 angeordnet. Zum Betrieb der angegebenen Schaltungsanordnung wird zunächst eine Zufallsbitfolge in dem Zufallsgenerator 8 erzeugt. Diese wird über die erste Verknüpfung 9 in das erste rückgekoppelte Schieberegister 11 und mittels eines ersten Datenaustausches 5 über die zweite Verknüpfung 10 in das zweite rückgekoppelte Schieberegister 12 eingeschrieben. Anschließend steuert die Kontrolle 7 sowohl das erste rückgekoppelte Schieberegister 11, als auch über einen Kontrolldatenaustausch 13 das zweite rückgekoppelte Schieberegister 12. In diesem Ausführungsbeispiel sind das erste und das zweite rückgekoppelte Schieberegister 11, 12 gleich gebildet, so daß nach der Berechnung in den Vergleicher 14 sowohl das Ergebnis des ersten rückgekoppelten Schieberegisters 11 als auch das Ergebnis des zweiten rückgekoppelten Schieberegisters 12 über den zweiten Datenaustausch 6 verglichen werden und gegebenenfalls, bei einer Abweichung zwischen dem ersten und dem zweiten Berechnungsergebnis, ein Alarm 15 ausgelöst wird.

### Bezugszeichenliste

- 1: Substrat
- 2: Erste Schaltung
- 3: Zweite Schaltung
- 4: Dritte Schaltung
- 5: Erster Datenaustausch
- 6: Zweiter Datenaustausch
- 7: Kontrolle
- 8: Zufallsgenerator
- 9: Erste Verknüpfung
- 10: Zweite Verknüpfung
- 11: Erstes rückgekoppeltes Schieberegister
- 12: Zweites rückgekoppeltes Schieberegister
- 13: Kontrolldatenaustausch
- 14: Vergleicher
- 15: Alarm
- 16: Oberseite
- 17: Unterseite

## Patentansprüche

1. Schaltungsanordnung zum Schützen einer Schaltung gegen Analyse und Manipulation mit:
einer ersten Schaltung (2), die auf einem Substrat (1) in einer ersten Technologie gebildet ist;
**dadurch gekennzeichnet, daß**
auf dem Substrat (1) eine zweite Schaltung (3) in einer zweiten Technologie angeordnet ist.

2. Anordnung nach Anspruch 1,
**dadurch gekennzeichnet, daß**
das Substrat (1) eine Oberseite (16) und eine ihr gegenüberliegende Unterseite (17) aufweist, und die erste Schaltung (2) auf der Oberseite (16) des Substrates (1) angeordnet ist.

3. Anordnung nach Anspruch 2,
**dadurch gekennzeichnet, daß**
die zweite Schaltung (3) auf der ersten Schaltung (2) angeordnet ist.

4. Anordnung nach einem der Ansprüche 2 oder 3,
**dadurch gekennzeichnet, daß**
die zweite Schaltung (3) auf der Unterseite (17) des Substrates (1) angeordnet ist.

5. Anordnung nach einem der Ansprüche 1 bis 4,
**dadurch gekennzeichnet, daß**
die erste Schaltung (2) in Siliziumtechnologie gebildet ist.

6. Anordnung nach einem der Ansprüche 1 bis 5,
**dadurch gekennzeichnet, daß**
die zweite Schaltung (3) in Polymertechnologie gebildet ist.

7. Anordnung nach einem der Ansprüche 1 bis 6,
**dadurch gekennzeichnet, daß**
die zweite Schaltung (3) die erste Schaltung (2) abdeckt.

8. Anordnung nach einem der Ansprüche 1 bis 7,
**dadurch gekennzeichnet, daß**
die zweite Schaltung (3) als Abschirmung für die erste Schaltung (2) angeordnet ist.

9. Anordnung nach einem der Ansprüche 1 bis 8,
**dadurch gekennzeichnet, daß**
in der ersten Schaltung (2) oder in der zweiten Schaltung (3) ein rückgekoppeltes Schieberegister angeordnet ist.

10. Verfahren zum Betrieb einer Schaltung gemäß der Ansprüche 1 bis 9 mit den Schritten:
- Durchführen einer Berechnung in der ersten Schaltung (2);
- Durchführen einer Berechnung in der zweiten Schaltung (3), wobei ein Teilergebnis erzeugt wird;
- Übertragen des Teilergebnisses von der zweiten Schaltung (3) an die erste Schaltung (2).

11. Verfahren nach Anspruch 10,
**dadurch gekennzeichnet, daß**
ein erstes Berechnungsergebnis der ersten Schaltung (2) mit einem zweiten Berechnungsergebnis der zweiten Schaltung (3) verglichen wird.

12. Verfahren nach Anspruch 11,
**dadurch gekennzeichnet, daß**
eine Manipulation der ersten Schaltung (2) und/oder eine Manipulation der zweiten Schaltung (3) durch den Vergleich des ersten Berechnungsergebnisses der ersten Schaltung (2) mit dem zweiten Berechnungsergebnis der zweiten Schaltung (3) detektiert wird.

13. Verfahren zur Herstellung einer Schaltung mit den Schritten:
- Bereitstellen eines Substrats (1);
- Bilden einer ersten Schaltung (2) in einer ersten Technologie auf dem Substrat (1);
- Bilden einer zweiten Schaltung (3) in einer zweiten Technologie auf dem Substrat (1).

14. Verfahren nach Anspruch 13,
**dadurch gekennzeichnet, daß**
die erste Schaltung (2) in einer Halbleitertechnologie und die zweite Schaltung (3) in einer Polymertechnologie hergestellt wird.
